Europäisches Patentamt

European Patent Office

Office européen des brevets

(19)

(11) Numéro de publication: **0 259 916**
**A2**

(12) ## DEMANDE DE BREVET EUROPEEN

(21) Numéro de dépôt: 87201599.5

(22) Date de dépôt: 27.02.84

(51) Int. Cl.⁴: **B29C 59/04** , B29C 47/00

(30) Priorité: 28.02.83 FR 8303228

(43) Date de publication de la demande:
**16.03.88 Bulletin 88/11**

(60) Numéro de publication de la demande initiale
en application de l'article 76 CBE : **0 136 324**

(84) Etats contractants désignés:
**AT CH DE FR GB LI NL SE**

(71) Demandeur: **ELF ISOLATION**
**5 rue du Dôme**
**F-75116 Paris(FR)**

(72) Inventeur: **Couderc, Pierre**
**2 Rue du Général Cordonnier**
**F-92200 Neuilly sur Seine(FR)**
Inventeur: **Corbel, Henri**
**12 Rue du Val d'Or**
**F-44250 Saint Brevin(FR)**

(74) Mandataire: **Boillot, Marc**
**SOCIETE NATIONALE ELF AQUITAINE**
**Division Propriété Industrielle Tour Elf**
**F-92078 Paris la Défense Cédex 45(FR)**

(54) **Appareillage de grainage d'un profilé réalisé par extrusion d'une matière thermoplastique.**

(57) L'appareillage comprend des moyens de grainage disposés à la sortie de moyens d'extrusion du profilé et comportant un contre-rouleau (68) monté libre en rotation et supportant le profilé, un rouleau de grainage (69) placé au-dessus de la bande cen-trale (66) du profilé et des moyens conformateurs principaux (64, 65) disposés du côté des retours latéraux du profilé. Des moyens conformateurs et de refroidissement secondaires sont disposés en aval des moyens de grainage et comportent un châssis support (73), une base (74) comprenant deux parties latérales (75) reliées par une partie centrale surélevée et munie de fentes d'aspiration (79), une contre-base (81) placée au-dessus de la base et pourvue de fentes d'aspiration (82), et un bac (84) rempli d'un fluide de refroidissement et placé en aval de la base, le profilé défilant entre la base et la contre-base et à travers le bac (84). En aval dudit bac sont montés des moyens de séchage consistant notamment en un conformateur (88) relié à une source de vide (89).

EP 0 259 916 A2

# APPAREILLAGE DE GRAINAGE D'UN PROFILE REALISE PAR EXTRUSION D'UNE MATIERE THERMOPLAS-TIQUE

L'invention concerne un appareillage de grainage d'un profilé réalisé par extrusion d'une matière thermoplastique et comportant une bande centrale bordée sur au moins un côté latéral par un retour. Cet appareillage est notamment utilisable pour le grainage d'un profilé apte à constituer l'élément de revêtement pour façade extérieure de bâtiment, qui fait l'objet de la demande de brevet européen N ° 84900989.9 (publication n° 0136324) dont la présente demande est une division, ledit élément constituant notamment le clin d'une vêture pour ladite façade.

L'appareillage de grainage suivant l'invention se caractérise en ce qu'il comprend au moins des moyens de grainage disposés à la sortie de moyens d'extrusion dudit profilé, lesdits moyens de grainage étant constitués par un contre-rouleau monté libre sur un axe de rotation et supportant le profilé à la sortie des moyens d'extrusion, un rouleau de grainage monté au-dessus de la bande centrale du profilé, ledit rouleau de grainage étant animé d'une vitesse linéaire égale à la vitesse de déplacement dudit profilé sur ledit contre-rouleau, et des moyens conformateurs principaux disposés du côté du ou des retours latéraux dudit profilé, lesdits moyens conformateurs étant reliés à une source de vide et pourvus de moyens de refroidissement de façon que le ou les retours du profilé soient refroidis et maintenus sensiblement dans leur forme de sortie des moyens d'extrusion.

Avantageusement, l'appareillage de grainage comprend en outre des moyens conformateurs et de refroidissement_secondaires disposés en aval des moyens de grainage, lesdits moyens conformateurs et de refroidissement secondaires étant constitués par un châssis support, une base reposant sur le châssis et comportant deux parties latérales reliées par une partie centrale surélevée dans laquelle sont ménagées des fentes d'aspiration inférieures, une contre-base disposée au-dessus de ladite base et dans laquelle sont ménagées des fentes d'aspiration supérieures, lesdites fentes supérieures et inférieures étant reliées à des moyens d'aspiration, un bac rempli d'un fluide de refroidissement disposé en aval de l'ensemble formé par la base et la contre-base, ledit profilé se déplaçant entre la base et la contre-base et à travers ledit bac de refroidissement avant de passer dans des moyens de séchage situés en bout de l'appareillage. Lesdits moyens de séchage peuvent consister notamment en un conformateur relié à une source de vide.

En outre, des éléments conformateurs reliés à une source de vide peuvent être disposés sur les parties latérales de la base.

Le niveau du fluide de refroidissement dans le bac est avantageusement situé au-dessus du plan de déplacement du profilé. En outre, de préférence, le bac est relié à une source d'alimentation en fluide de refroidissement et le niveau est maintenu constant dans ledit bac de façon que l'aspiration du fluide de refroidissement s'écoulant de part et d'autre du profilé et en sens inverse du mouvement dudit profilé soit compensée par ladite alimentation.

Les moyens conformateurs principaux consistent en particulier en un conformateur formé de deux éléments conformateurs disposés chacun du côté d'un retour latéral du profilé, l'écartement entre lesdits éléments conformateurs étant réglable de manière à pouvoir modifier éventuellement la forme du ou des retours dudit profilé.

Avantageusement, le diamètre du rouleau de grainage est plus petit que le diamètre du contre-rouleau. De plus, l'écartement entre le rouleau de grainage et le contre-rouleau peut être réglable.

L'appareillage suivant l'invention permet de conférer au profilé un aspect extérieur grainé, par exemple un aspect d'enduit traditionnel.

D'autres avantages et caractéristiques de l'invention apparaîtront à la lecture de la description ci-après d'une forme de réalisation d'un appareil de grainage suivant l'invention donnée à titre indicatif et nullement limitatif et se référant au dessin annexé, dont l'unique figure représente une vue partielle et schématique, en perspective, dudit appareillage utilisé pour le grainage d'un clin pour vêture.

En se référant à la figure, le clin, sortant de l'extrudeuse non représentée, est à l'état ramolli sous la forme d'une bande continue (66) et à une température de l'ordre de 150°C au bout d'une certaine distance. La bande passe dans un premier conformateur en deux parties (64) et (65), qui sont disposées du côté des parties latérales de la bande (66), lesdites parties latérales constituant en fait les futurs retours des clins, après découpage de la bande (66). L'écartement entre les parties (64) et (65) du conformateur est réglable de manière à permettre une modification éventuelle des retours du clin. Les parties 64 et 65, ou éléments conformateurs sont reliées chacune à une source de vide ou ensemble à une même source de vide (67), et sont également pourvues de moyens de refroidissement non représentés. Au-dessous de la bande (66) est disposé un contre-rouleau lisse (68), monté fou sur son axe, non représenté, et présentant un diamètre de l'ordre de 400 mm, tandis qu'au-dessus de ladite bande (66) est monté un rouleau de grainage (69) plus long que le contre-rouleau (68) et de diamètre d'environ 280 mm et comportant des aspérités (70) aptes, lors de l'entraînement du rouleau (69) par des moyens non représentés, à réaliser des déformations locales qui conféreront à la bande (66) et donc au clin obtenu à partir de cette bande, un aspect grainé. La vitesse linéaire du rouleau (69) est égale à la vitesse de déplacement de la bande (66) dans la direction matérialisée par une flèche (71), ceci étant réalisé par asservissement électronique.

Les éléments conformateurs (64) et (65) assurent un certain refroidissement des bords latéraux de la bande (66) et, par le vide qu'ils créent, plaquent la surface externe desdits bords latéraux sur leurs faces en regard de ces bords latéraux, ce qui empêchent, lors du grainage, un enroulement de la bande (66) sur le rouleau de grainage.

A la sortie du premier conformateur, formé par les éléments conformateurs (64) et (65), la bande (66) a donc subi un premier refroidissement, qui est plus important sur les retours latéraux, ou bords latéraux, que sur la partie centrale (72) passant entre les rouleaux (68) et (69). A titre indicatif, la partie centrale (72) de la bande (66) présente une température de l'ordre de 80°C à la sortie de l'ensemble de grainage comportant le premier conformateur, formé des éléments conformateurs (64) et (65), le rouleau de grainage (69) et le contre-rouleau lisse (68).

En aval de l'ensemble de grainage, comportant les moyens (64) à (70) comme indiqué plus haut, l'appareillage comprend également des moyens de refroidissement et conformateurs secondaires, lesdits moyens conformateurs et de refroidissement étant montés sur un châssis de support (73) de même que l'ensemble de grainage.

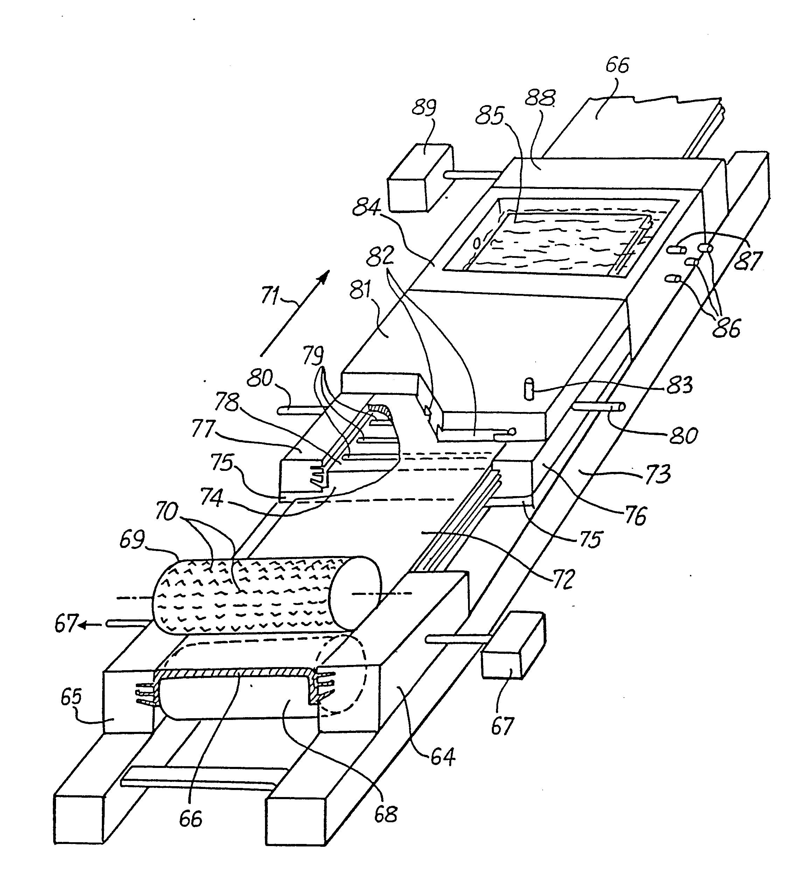

Les moyens conformateurs secondaires comprennent une base (74) munie de rebords latéraux (75) sur lesquels sont montés des éléments conformateurs (76) et (77) analogues aux éléments conformateurs (64) et (65). La base (74) présente un profil semblable à celui de la bande (66), la partie centrale (72) de la bande (66) se déplaçant sur la face supérieure (78) de la base (74) qui comporte à son extrémité amont des fentes d'aspiration (79), par exemple au nombre de trois dans le schéma de la figure 6. Au-dessus des éléments conformateurs (76) et (77), qui sont reliés à une source de vide non représentée par des conduits (80), est disposée une plaque (81) servant de couvercle pour la base (74). Des fentes d'aspiration (82) sont également ménagées dans le couvercle (81), lesdites fentes étant notamment en nombre égal au nombre des fentes (79). Lesdites fentes (82) et (79) sont reliées par une ou plusieurs conduites (83) à une pompe d'aspiration non représentée.

Un bac (84) rempli d'un fluide de refroidissement (85) tel que de l'eau, est disposé après les éléments conformateurs (76) et (77). La bande (66), déjà refroidie latéralement par les éléments conformateurs (76) et (77), arrive dans ledit bac (84) dans sa forme finale. Le bac (84) comprend des conduits d'alimentation en eau (86) et une conduite de trop-plein (87). Grâce aux fentes (79) et (82), une faible quantité d'eau est aspirée du bac (84), dans une direction contraire à celle (71) de déplacement de la bande (66). La pellicule d'eau en mouvement, qui se forme de part et d'autre de ladite bande (66) et qui est évacuée par les fentes (79) et (82), non seulement produit un refroidissement supplémentaire mais surtout évite le matage de la bande grainée.

Enfin, un conformateur standard (88) relié à une source de vide (89) achève la conformation, le refroidissement et le séchage de la bande (66) qui sort de l'appareil à la température ambiante ou à une température proche de la température ambiante et dans sa forme définitive, prête à être découpée en éléments séparés, qui constituent chacun un clin pour la vêture.

## Revendications

1 - Appareillage de grainage d'un profilé réalisé par extrusion d'une matière thermoplastique et comportant une bande centrale bordée sur au moins un côté latéral par un retour, caractérisé en ce qu'il comprend des moyens de grainage disposés à la sortie de moyens d'extrusion dudit profilé, lesdits moyens de grainage étant constitués par un contre-rouleau (68) monté libre sur un axe de rotation et supportant le profilé à la sortie des moyens d'extrusion, un rouleau de grainage (69) monté au-dessus de la bande centrale (66) du profilé, ledit rouleau de grainage étant animé d'une vitesse égale à la vitesse de déplacement dudit profilé sur ledit contre-rouleau, et des moyens conformateurs principaux (64, 65) disposés du côté du ou des retours latéraux dudit profilé, lesdits moyens conformateurs étant reliés à une source de vide (67) et pourvus de moyens de refroidissement de façon que le ou les retours de l'élément soient refroidis et maintenus sensiblement dans leur forme de sortie des moyens d'extrusion.

2 - Appareillage suivant la revendication 1, caractérisé en ce qu'il comprend en outre des moyens conformateurs et de refroidissement secondaires disposés en aval des moyens de grainage, lesdits moyens conformateurs et de refroidissement secondaires étant constitués par un châssis support (73), une base (74) reposant sur le châssis et comportant deux parties latérales (75) reliées par une partie centrale surélevée dans laquelle sont ménagées des fentes d'aspiration (79) inférieures, une contre-base (81) disposée au-dessus de ladite base et dans laquelle sont ménagées des fentes d'aspiration (82) supérieures, lesdites fentes supérieures et inférieures étant reliées à des moyens d'aspiration, un bac (84) rempli d'un fluide de refroidissement disposé en aval de l'ensemble formé par la base et la contre-base, ledit profilé se déplaçant entre la base et la contre-base et à travers ledit bac de refroidissement avant de passer dans des moyens de séchage (88, 89) situé en bout de l'appareillage.

3 - Appareillage suivant la revendication 2, caractérisé en ce que les moyens de séchage sont constitués par un conformateur (88) relié à une source de vide (89).

4 - Appareillage suivant la revendication 2, caractérisé en ce que les éléments conformateurs (76, 77) reliés à une source de vide sont disposés sur les parties latérales de la base.

5 - Appareillage suivant la revendication 2, caractérisé en ce que le niveau de fluide de refroidissement dans le bac est situé au-dessus du plan de déplacement du profilé.

6 - Appareillage suivant la revendication 2 ou 5, caractérisé en ce que le bac est relié (86) à une source d'alimentation en fluide de refroidissement et que le niveau est maintenu constant (87) dans ledit bac de façon que l'aspiration du fluide de refroidissement s'écoulant de part et d'autre du profilé et en sens inverse du mouvement dudit profilé soit compensée par ladite alimentation.

7 - Appareillage suivant la revendication 1, caractérisé en ce que le diamètre du rouleau de grainage est plus petit que le diamètre du contre-rouleau.

8 - Appareillage suivant la revendication 1 ou 7, caractérisé en ce que l'écartement entre le rouleau de grainage et le contre-rouleau est réglable.

9 - Appareillage suivant la revendication 1, caractérisé en ce que les moyens conformateurs principaux (64, 65) consistent en un conformateur formé de deux éléments conformateurs (64) et (65) disposés chacun du côté d'un retour latéral du profilé, l'écartement entre lesdits éléments conformateurs étant réglable.